# EUROPEAN PATENT APPLICATION

(11) **EP 1 635 307 A1**
(43) Date of publication of application: **15.03.2006**
(21) Application number: 05016574.5
(22) Date of filing: 29.07.2005
(51) Int. Cl.: G07F 19/00

(54) **Information processing apparatus**

(30) Priority: 10.09.2004 JP 2004263194
(71) Applicant: Hitachi-Omron Terminal Solutions, Corp., Tokyo (JP)
(72) Inventor: Shinjo, Hiroshi, Hitachi, Ltd., Int. Prop. Office, Chiyoda-ku Tokyo 100-8220 (JP); Nagayoshi, Hiroto, Hitachi Ltd, Int. Prop. Office, Chiyoda-ku Tokyo 100-8220 (JP); Sako, Hiroshi, Hitachi Ltd, Int. Prop. Office, Chiyoda-ku Tokyo 100-8220 (JP)
(74) Representative: Strehl Schübel-Hopf & Partner

(57) **Abstract**

It is an object of this invention to detect illegal users of ATM by using face images. A face area is detected in an image inputted from a camera, features registered in a criminal face image database and the features of user's face image, and if the user is determined as a criminal, transaction halt, warning, reregistration of the face image, and the like are performed. If plural persons are detected in the image, a backward person is determined as being peeping at user's operations from the position of the person, and the registration of the face image of the person, and warning are performed.

## Description

### TECHNICAL FIELD TO WHICH THE INVENTION BELONGS

The present invention relates to a terminal that performs information processing based on users' processing requests. Particularly, it relates to an automated teller machine (ATM). More particularly, it relates to a method of monitoring ATM using face images. It relates to a method of controlling ATM processing by using face recognition. Further, it relates to a technique for enabling the prevention of illegal transaction by using face recognition.

### RELATED BACKGROUND ART

Recently, in ATMs, illegal withdrawals of cash by stolen cards and counterfeit cards and the use of counterfeit bills are on the increase. In such a social situation, biometrics authentication is in the limelight which identifies individuals based on features (biometrics information) specific to the individuals. Objects of authentication include the vein patterns of hands and fingers, fingerprint, iris, and face. The biometrics authentication has two usage modes, verification and identification. The verification determines whether a user in transaction is the person in question. That is, it confirms one-to-one relationship between inputted biometrics information and in-system registration information corresponding to the ID of the user. On the other hand, the identification determines who a user in transaction is. That is, it compares inputted biometrics information and registration information of plural persons within the system to thereby confirm one-to-N relationship.

A known example of providing ATM with biometric authentication for the purpose of crime investigation and control is described in JP-A No. 196710/2003. The JP-A No. 196710/2003 verifies biometrics information recorded in a card and biometrics information inputted during an operation on ATM, and when they do not match, stores the biometrics information as a material evidence. JP-A No. 196710/2003 uses fingerprints as biometrics information.

Another example of biometrics authentication is recognition by a face image inputted from a camera and the like (face recognition). Since the face recognition is lower in recognition precision than fingerprint authentication, it is unsuitable to use it alone for individual authentication. The face recognition, which is used more frequently for verification than for identification, finds major application in entrance/exit management and a computer login function. The effect of crime control can be expected also in face authentication. A known example in this viewpoint is described in JP-A No. 207999/2002.

JP-A No. 207999/2002 obtains a face image when a stolen card is used, and transmits it to a remote monitoring center.

### DISCLOSURE OF THE INVENTION

The problem to be solved by the present invention is to detect a suspicious person using biometrics information during ATM use to thereby increase the safety of ATM use. Specifically, a problem of the present invention is to detect or prevent illegal acts such as the use of stolen cards and counterfeit cards and the peeping of personal identification numbers by performing face detection or authentication using image information from a camera without the need for legal card users to previously register biometrics information.

More specifically, a first problem is to detect habitual actors of illegal transactions in ATM.

The method of JP-A No. 196710/2003 verifies biometrics information recorded in a card and user's biometrics information on a one-to-one level. Therefore, if the user does not previously register biometrics information, it cannot be determined whether the user is a legal user. Moreover, the biometrics information must be stored in a card and there is a problem in that if the card is stolen, the biometrics information might also be stolen.

On the other hand, crimes such as illegal withdrawals of deposits and use of counterfeit bills are often conducted concentratedly in a short period of time by an identical person. In such a case, although a criminal's face can be determined from a past crime history and images of a monitoring camera, a situation in which it cannot be determined which card is used is possible. Therefore, it is necessary to register as many pieces of criminals' biometrics information as the number of criminals and make one-to-N identification between them and user's biometrics information. The method of the JP-A No. 196710/2003, which is for verification, cannot be used for such a use.

The method of the JP-A No. 207999/2002, only when a stolen card has been used, obtains face images and transmits the images to a monitoring center. However, since the method cannot detect a criminal if the card is not registered in advance as a stolen card, it is impossible to detect a criminal only the face of whom is known, as described above.

A second problem to be solved by the present invention is to detect persons who perform transactions in plural cards. The reason is that criminals often perform transactions using plural cards.

For such problems, the method of the JP-A No. 196710/2003 is incapable of detecting if biometrics information is not registered in advance. The method of the JP-A No. 196710/2003 also is incapable of detecting if cards used are not registered as stolen cards.

A third problem to be solved by the present invention is to detect persons who conduct suspicious acts such as the peeping of a personal identification number when others are using an ATM.

Both JP-A No. 196710/2003 and JP-A No. 207999/2002 aim at detecting illegal users but are incapable of detecting because they are indifferent to suspicious persons around a user.

A first information processing apparatus invented to solve these problems is an information processing method that performs processing based on processing request input from a user. The information processing method is characterized in that it includes the steps of: taking a user's face image from a camera mounted in the apparatus; detecting a user's face area in the image; determining whether a face area exists in the image; when a face area exists, performing face identification from facial information registered in advance; determining from a result of the face identification whether the user is a suspicious person registered in advance; and if the user is a suspicious person, performing processing for the suspicious person.

A second information processing apparatus invented to solve these problems is an information processing method that performs processing based on processing request input from a user. The information processing method is characterized in that it includes the steps of: from a storage medium storing user's ID information, obtaining ID information of a valid user of the storage medium, and taking a user's face image from a camera mounted in the apparatus; detecting a user's face area in the image; determining whether a face area exists in the image; and when a face area exists, registering face information and ID information of the valid user in pairs.

A third information processing apparatus invented to solve these problems is an information processing method that performs processing based on processing request input from a user. The information processing method is characterized in that it includes the steps of: taking a user's face image from a camera mounted in the apparatus; detecting a user's face area in the image; determining whether a face area exists in the image; when a face area exists, performing face identification from facial information registered in advance; determining from a result of the face identification whether an identical person uses plural cards; and when an identical person uses plural cards, regarding the person as a suspicious person and performing processing for the suspicious person.

A fourth information processing apparatus invented to solve these problems is an information processing method that performs processing based on processing request input from a user. The information processing method is characterized in that it includes the steps of: taking a user's face image from a camera mounted in the apparatus; detecting the face area of a user in transaction in the image; determining whether a face area exists in the image; when the face area of the user exists, determining whether the face of other than the user exists behind the user; and when the face of other than the user exists, determining as a suspicious person who is peeping at operations of the user, and performing processing for the suspicious person.

A fifth information processing apparatus invented to solve these problems is an information processing method that performs processing based on processing request input from a user. The information processing method is characterized in that it includes the steps of: taking a user's face image from a camera mounted in the apparatus; detecting a user's face area in the image; determining whether a face area exists in the image; when a face area exists, if the card number of a transaction card currently being used is registered as that of a peeped card, comparing facial information registered in pairs with the card number of the peeped card with user's facial information; and when the user is determined as a person who peeped previously at a transaction by the card of the number, performing processing for the suspicious person.

A sixth information processing apparatus invented to solve these problems is an information processing method that performs processing based on processing request input from a user. The information processing method is characterized in that it includes the steps of: taking a user's face image from a camera mounted in the apparatus; detecting a user's face area in the image; determining whether a face area exists in the image; when a face area exists, performing face identification from facial information registered in advance; determining from a result of the face identification whether the user is a suspicious person registered in advance; if the user is a suspicious person, performing processing for the suspicious person; when a face area exists, registering facial information and a card number in pairs; when a face area exists, performing face identification from facial information registered in advance; determining from a result of the face identification whether an identical person uses plural cards; when an identical person uses plural cards, regarding the person as a suspicious person and performing processing for the suspicious person; when a face area exists, determining whether the face of other than the user exists behind the user; when the face of other than the user exists, determining as a suspicious person who is peeping at operations of the user, and performing processing for the suspicious person; when a face area exists, if the card number of a transaction card currently being used is registered as that of a peeped card, comparing facial information registered in pairs with the card number of the peeped card with user's facial information; and when the user is determined as a person who peeped previously at a transaction by the card of the number, performing processing for the suspicious person.

An effect of the present invention is to prevent safety reduction by suspicious persons during ATM use. More specifically, a first effect of the present invention is to detect criminals whose face images are registered in advance, during ATM use.

A second effect is to detect persons who use plural cards. The reason is that criminals often use plural cards.

A third effect is to detect criminals who peep at other's personal identification number and the like.

A fourth effect is to detect illegal withdrawals by persons who peeped at other's personal identification number by use of the personal identification number of card at which they peeped.

### BRIEF DESCRIPTION OF THE DRAWINGS

FIG. 1 is a drawing of a suspicious person detection flow of a first embodiment;
FIG. 2 is a drawing showing the configuration of ATM of the present invention;
FIG. 3 is a drawing showing the configuration of a system of the present invention;
FIG. 4 is a drawing showing the flow of the detection and registration of suspicious person detection of a first embodiment;
FIG. 5 is a drawing showing the flow of suspicious person detection and bill validation threshold operation of a first embodiment;
FIG. 6 is a drawing showing the flow of suspicious person detection and transaction halt of a first embodiment;
FIG. 7 is a drawing showing the flow of face information registration of a second embodiment;
FIG. 8 is a drawing showing the flow of suspicious person detection of a second embodiment;
FIG. 9 is a drawing showing the flow of detecting a person who reads a personal identification number, of a third embodiment;
FIG. 10 is a drawing showing the flow of detecting a person who reads a personal identification number, of a fourth embodiment;
FIG. 11 is a drawing showing the flow of suspicious person detection of a fifth embodiment;
FIG. 12 is a drawing showing a face recognition processing flow; and
FIG. 13 is a drawing showing an example of face detection result.

### DESCRIPTION OF SPECIAL EMBODIMENTS

Several specific detailed examples will be provided to give overall descriptions of the present invention. However, it is apparent to those skilled in the art that the present invention can be implemented without these specific details. Descriptions and drawings of this specification are ordinary means used to communicate the content of the invention from those skilled in the art to other skilled persons. The description of "one embodiment" in this specification does not always apply to only the same embodiment, and individual embodiments are not mutually limited. Moreover, operation sequences of processing showing embodiments of the present invention are only an example and not limited.

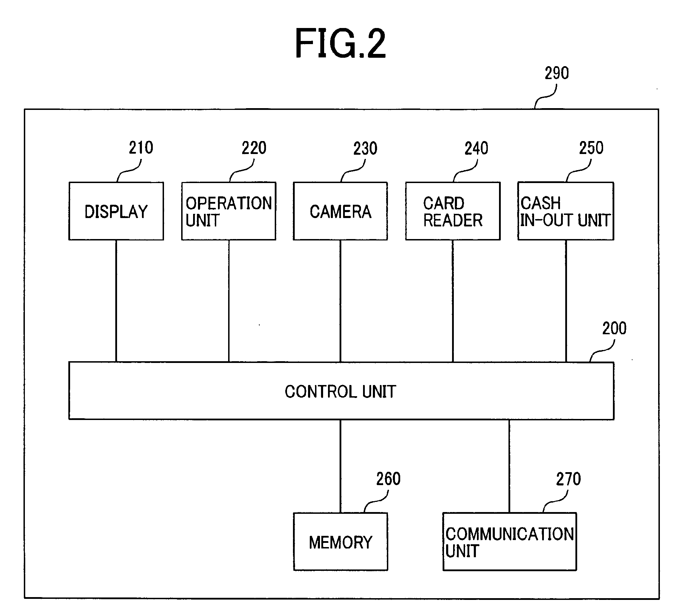

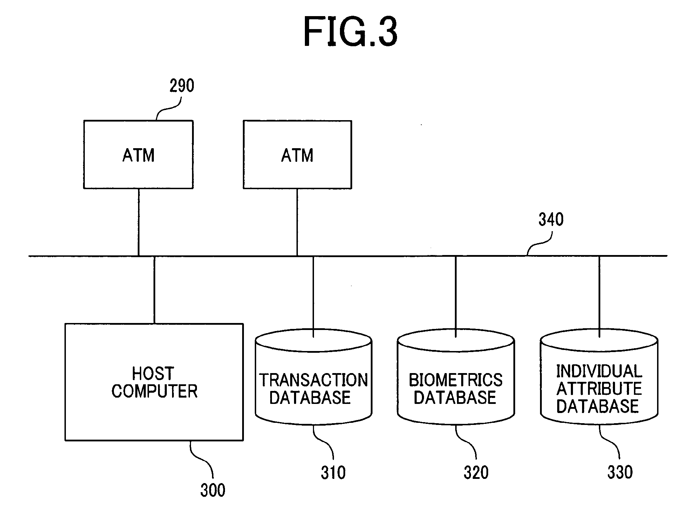

Before describing concrete embodiments, the configuration of an ATM apparatus of the present invention is shown in FIG. 2, and the configuration of a system is shown in FIG. 3.

FIG. 2 is a drawing showing the configuration of an ATM 290 of the present invention. A control unit 200 controls a display 210, an operation unit 220, a camera 230, a card reader 240, a cash in-out unit 250, a memory 260, and a communication unit 270. The control unit 200 performs face identification, card recognition, bill validation, and other processings as well as the control of the entire ATM 290. The display 210, for example, CRT and a liquid crystal display, displays service contents and processing procedures. The operation unit 220, for example, a keyboard and a touch panel, inputs information from the user such as menu selection and personal identification number. The camera 230 primarily photographs a face. The card reader 240 reads information from a magnetic card and an IC card. The cash in-out unit 250 inputs and outputs bills for transactions such as inputting bills to be deposited and discharging bills to be withdrawn. The memory 260, for example, hard disk and memory, stores information for processing in the ATM. To implement the present invention, programs for running the camera 230, the control unit 200, and the communication unit 270 are stored in the memory 260. The communication part 270 performs communications between the ATM 290 and an external computer and databases over lines. The ATM 290 includes other devices such as a passbook printer and processings (not described because they have no relation with the present invention), in addition to the components 200 to 270.

The term "card" refers to storage media such as a magnetic card and an IC card for storing information necessary to identify an account. ID information of a legal card user refers to biometrics information such as a personal identification number, a face image, and fingerprints used to authenticate the contractor of an account of the card or contractor-approved other user. Users in transaction referred to in the description of the present invention include users who, after inserting a card into an ATM, are waiting for return of it, and persons who are near an ATM and are to use it or have just finished using it. The face images of users in transaction and facial information stored in a database may be face pictures inputted from a camera, as well as features extracted from face pictures or information produced by modeling the face pictures.

FIG. 3 is a drawing showing a basic system configuration of the present invention. The ATM 290 is connected via a network 340 to a host computer 300, other ATMs, a transaction database 310 for performing transactions such as deposits and withdrawals, a biometrics information database 320 that stores face images and information produced by modeling the face images, and an individual attribute database 330 that stores attribute information such as classifications of card numbers and suspicious persons corresponding to individual biometrics information. The biometrics information database 320 and the individual attribute database 330 may be installed in the ATM 290 without using the network. Information stored in the transaction database 310 includes ID information of legal card users. The biometrics information database 320 and the individual attribute database 330 may be integrated into one database called a suspicious person database.

### First Embodiment

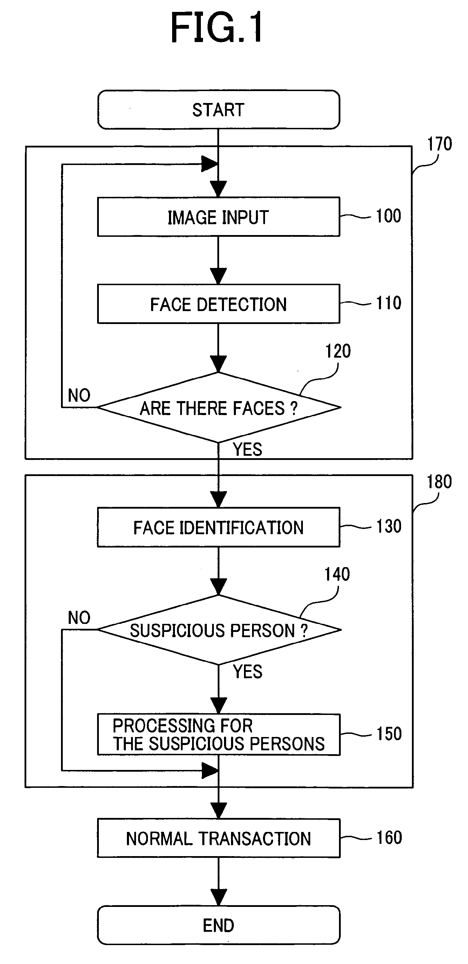

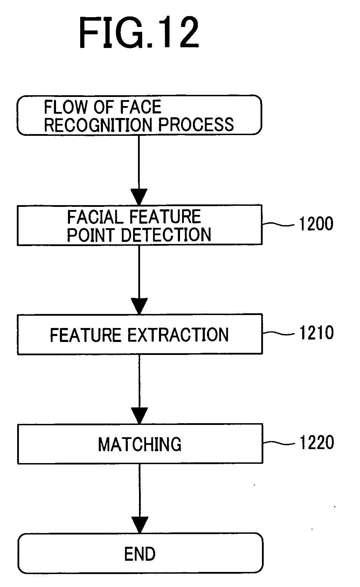

As a first embodiment of the present invention, an example of detecting a registered suspicious person will be described with reference to FIG. 1 and FIGS. 3 to 6. Image input processing 100 inputs an image from the camera 230 mounted in the ATM. Face detection processing 110 detects a face area in the image. The face detection processing 110 will be described in detail later. In face detection determination processing 120, face detection processing is repeated if a face area is not detected. When a face is detected, face identification processing 130 determines whether the detected face matches a face registered as a suspicious person in the biometrics information database 320. Face identification processing 130 will be described in detail later with reference to FIG. 12. If the user is determined as a registered suspicious person in face identification determination processing 140, processing for a suspicious person 150 is performed. The processing for a suspicious person 150 will be described in detail later. If the user is determined as not being a suspicious person, a normal transaction 160 such as deposits and withdrawals is performed. Depending on the result of the processing for a suspicious person 150, the normal transaction 160 may be performed after processing for a suspicious person 150.

In the processing flow, a series of processings 100, 110, and 120 from image input to face detection are defined as 170. Moreover, a series of processings 130, 140, and 150 from face identification to processing for a suspicious person are defined as 180.

A normal transaction is started when a card is inserted or the touch panel is operated. The image input 100 for detecting suspicious persons may be performed before or after the normal transaction 160 is started. This also applies to subsequent processing flows.

Face detection and face identification, which are performed only once in FIG. 1, may be performed any number of times by repeating processings 100 to 150. Moreover, the processings 100 to 150 may be performed also for the duration of a normal transaction. A processing flow not including the normal transaction 160 is also possible. That is, as soon as a person in front of an ATM is detected, whether the person is a suspicious person can be determined regardless of the existence of normal transaction. These three points also apply to subsequent processing flows. Information registered as suspicious persons in the biometrics information database, used in the face identification processing 130, can be obtained, for example, by manually selecting persons having a history of illegal transaction from an existing transaction history and registering the face image of the persons. As other methods, as in embodiments described later, face images can be automatically registered.

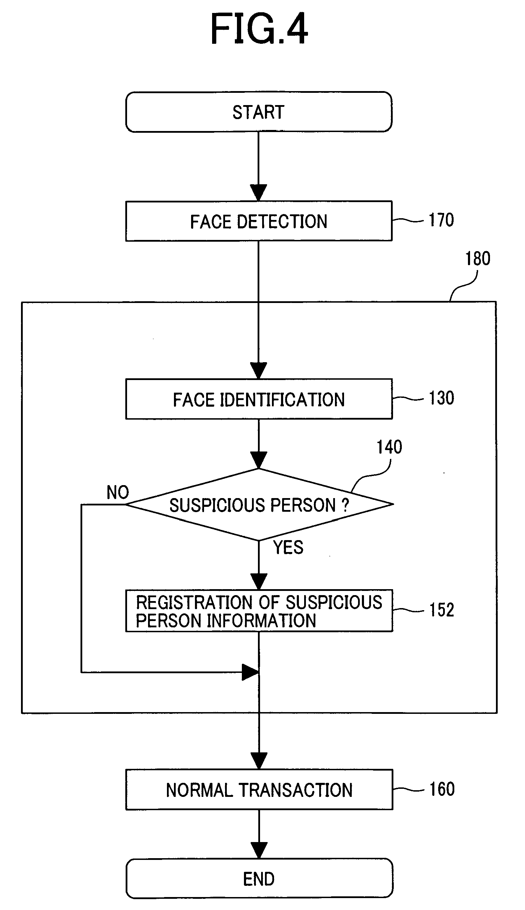

The following describes processing for a suspicious person 150. One example of processing for a suspicious person 150 is the registration of suspicious person information 152 as shown in FIG. 4. As information registered here, the face image and other information of a person determined as a suspicious person are registered in the biometrics information database 320, and the number and other information of a card used are registered in the individual attribute database 330. The biometrics information and the attribute information are registered in pairs. These pieces of information can be used for criminal investigations and subsequent detection of a suspicious person.

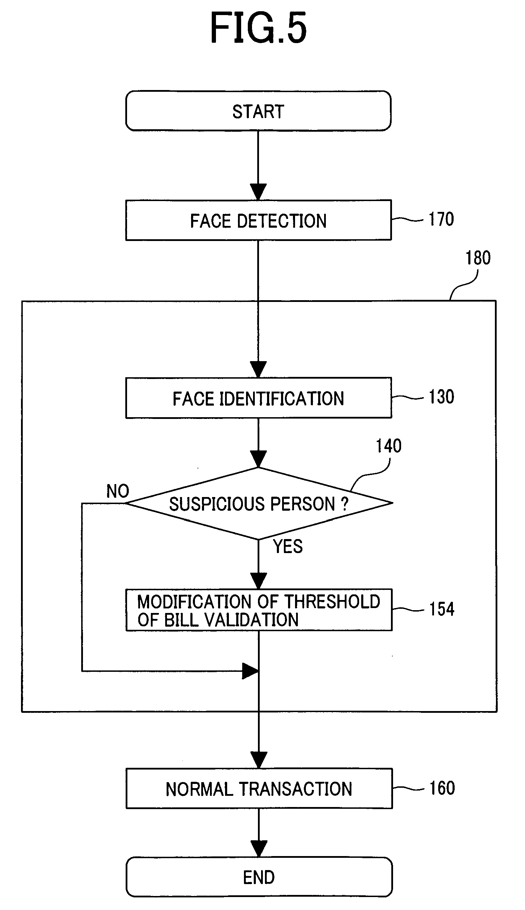

As another example of the processing for a suspicious person 150, as shown in FIG. 5, when an ATM user is determined as a suspicious person having a history of using counterfeit bills, a determination threshold of bill true/false determination (bill validation) is modified (154). When an unknown kind of counterfeit bill is inputted, a previous threshold value may be insufficient to identify counterfeit bills. Therefore, when a determination is made as a suspicious person, a determination threshold is made stricter than usual to prevent the admission of counterfeit bills. These embodiments are characterized in that the control of bill validation and ATM is changed using face identification processing.

Another example of the processing for a suspicious person 150 is to warn watchmen and bank clerks. For example, an alarm may be issued from an ATM, and a signal indicating abnormality and the face image of a suspicious person inputted from a camera may be transferred to other apparatuses connected through a network.

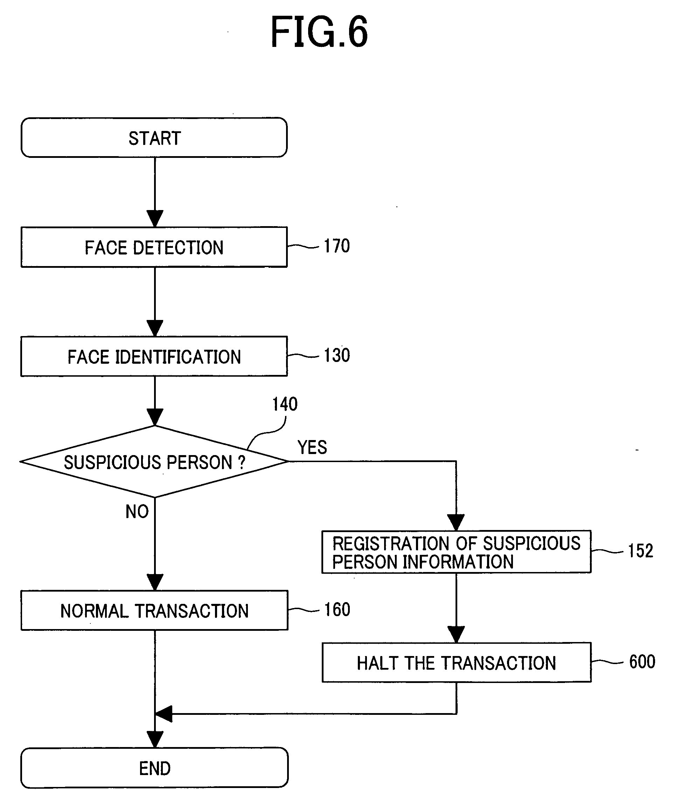

As another example of the processing for a suspicious person 150, as shown in FIG. 6, the transaction may be halted 600 after the registration of suspicious person information 152. In this case, unlike the flow of FIG. 1, after the transaction is halted, normal transactions are not performed. Examples of transaction halt include card withdrawal.

The 152, 154, and 600 and warning processings, which have been described as examples of the processing for a suspicious person 150 of FIG. 1, may be used not only alone but also in combination.

In this embodiment, a suspicious person can be identified by comparing the face image of a user in transaction with the face images of suspicious persons previously registered. This method is effective at preventing illegal transactions by suspicious persons when the suspicious persons are on a blacklist and the facial information of the persons is known. Second Embodiment

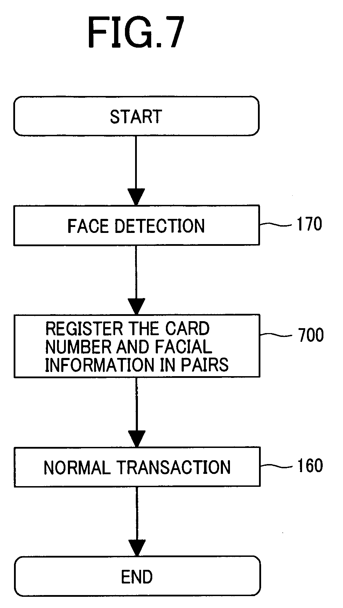

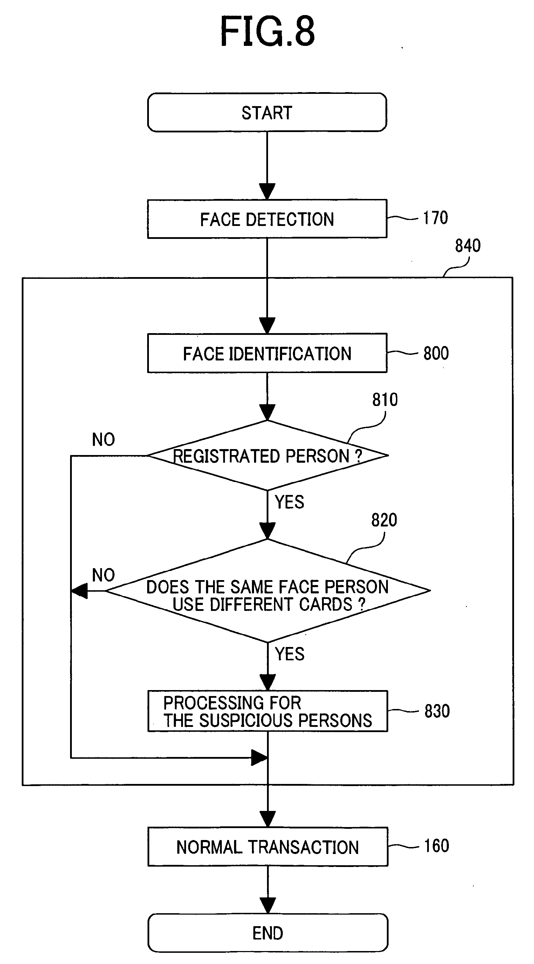

As a second embodiment of the present invention, an example of detecting a person using plural cards as a suspicious person will be described with reference to FIGS. 7 and 8.

FIG. 7 shows the flow of registering facial information when an ATM is used. Face detection processing 170 detects a face area in an image. When a face is detected, information about a user in transaction is registered (700) . A face picture and other information about the user in transaction are registered in the biometrics information database 320, and the number and other information of a card used are registered in the individual attribute database 330. The biometrics information and the attribute information are registered in pairs. In the case of FIG. 7, unlike the first embodiment, information of all users is registered. Subsequently, normal transaction 160 is performed.

FIG. 8 is a flowchart for determining whether an ATM user in transaction is a suspicious person. After face detection processing 170, face identification processing 800 identifies a detected face, using the facial information registered in the biometrics information database 320 in the registration processing 700 of FIG. 7. In face determination processing 810, if the user's face is not determined as a face registered as a past user, normal transaction is continue (160). When determined as a registered face, card number determination processing 820 determines whether attribute information such as a card number during past use registered in the individual attribute database 330 is the same as attribute information such as a card number in the current transaction. If they are the same, normal transaction is continued (160). If they differ, since it is determined that an identical person uses plural cards, the person is considered to be probably a suspicious person, and processing for the suspicious person 830 is performed. Subsequently, normal transaction 160 is performed.

When facial information of legal card users is previously registered, in 700, instead of registering information of all users, information of a user in transaction may be registered only when authentication by ID information of legal users fails, such as when the facial information of the user in transaction does not match facial information of registered legal users. In this case, in the face determination processing 810, when the facial information of a user in transaction matches facial information of registered legal users, processing of identification from facial information already registered as past users may be omitted.

In the processing flow, a series of processings 800, 810, 820, and 830 are defined as 840. One example of processing for a suspicious person 830 is to warn watchmen. Another example of processing for a suspicious person 830 is to register the biometrics information and the attribute information as information of a suspicious person. One embodiment of it is to provide the attribute information database registered in 700 with a field indicating whether an ATM user is a suspicious person. The field indicating a suspicious person may include a caution level that increases in rank according to an increase in the number of times an identical person is determined as being using different cards. When the caution level is high, in the face determination processing 810 that follows, a threshold for determination of identical person is lowered, or the ATM user is manually registered as a suspicious person for the purpose of the use in the first embodiment. As another example of processing for a suspicious person 830, bill validation threshold processing 154 of FIG. 5 is available. As another example of processing for a suspicious person 830, transaction halt processing 600 of FIG. 6 is available.

Generally, a recognition rate of face identification tends to decrease according to an increase in the number of persons registered in the biometrics information database. Therefore, the number of persons subjected to identification in the biometrics information database 320 may be limited by date and place. For example, since criminals tend to commit crimes in fixed areas in a short period of time, only persons registered in specific areas within one week may be subjected to identification.

For detection of only the case where plural cards are successively used in an identical ATM, only users immediately before a relevant transaction may be subjected to identification. In this case, since the biometrics information database 320 and the attribute information database 330 may be placed in the memory 260 within the ATM because they do not need use the network.

Hereinbefore, plural examples of processing for a suspicious person 830 have been described. For the processing, processings of the individual examples may be performed not only alone but also in combination. According to this embodiment, since suspicious persons can be determined on the assumption that identical persons use plural cards, it is unnecessary to previously register suspicious persons, so that the number of man-hours for system management can be reduced. Moreover, since users determined as suspicious persons by this embodiment can be blacklisted, a suspicious person database can be easily created.

### Third Embodiment

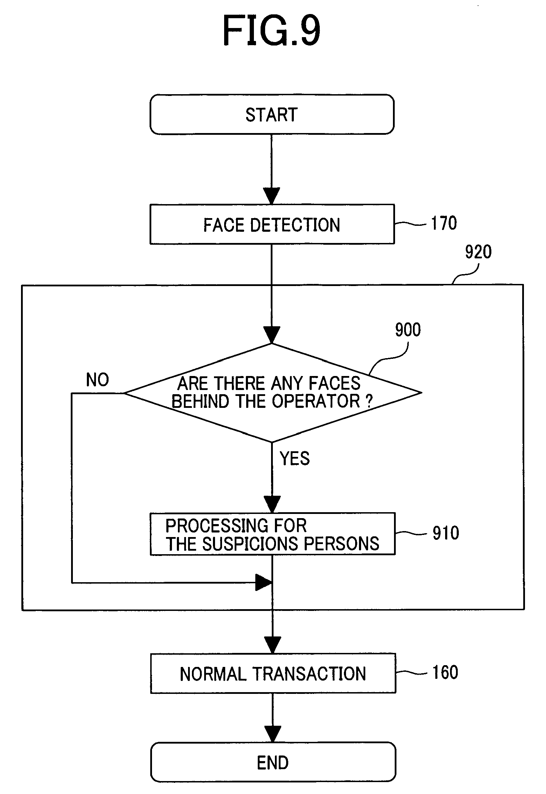

As a third embodiment of the present invention, with reference to FIG. 9, a description will be made of an example of detecting a person who peeps at others' personal identification numbers, as a suspicious person.

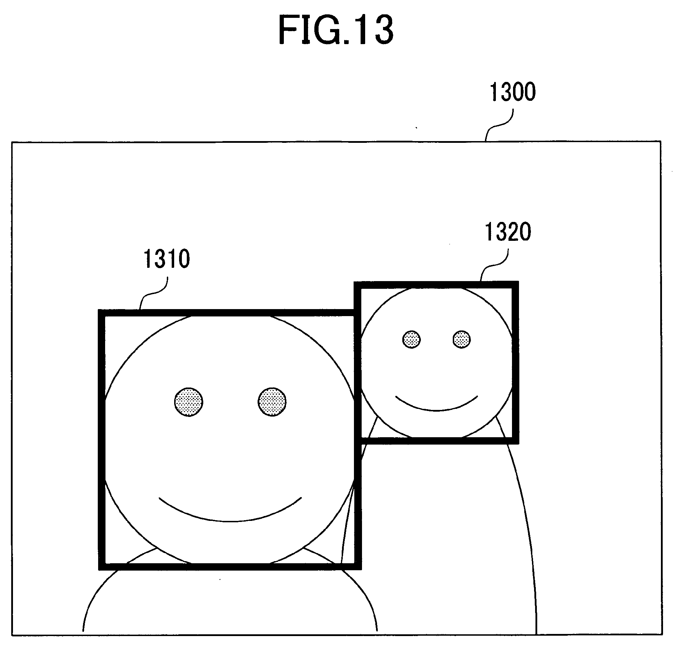

Face detection processing 170 detects a face area in an image. Next, peeping determination 900 is performed. Whether a peeping person exists can be determined depending on whether a face other than user's face is detected in the image in the middle of transaction, particularly during input of a personal identification number. FIG. 13 shows an example of an image 1300 inputted from a camera in which faces are detected. A forward face 1310 (larger face in the image) is regarded as the face of the user in transaction, and a backward face 1320 as the face of a peeping person. However, since the image may contain the faces of persons waiting in a row at the back of the user, a determination must be made taking into account the sizes and directions of the faces, in addition to the number of faces. A person at the back of the user may be determined as a suspicious person when it can be determined that the person can see the hands of the user from the size of the person's face greater than a given size within the image and the position of the eye area of the person. If there is no peeping person, normal transaction is continued (160), and if there is a peeping person, processing for a suspicious person 910 is performed before continuing normal transaction (160).

In the processing flow, a series of processings 900 and 910 are defined as 920. One example of the processing for a suspicious person 910 is to register the faces of persons determined as being peeping in the biometrics information database 320. In this case, as a card number that may be illegally used in future, a relation with facial information of the peeping person registered in the biometrics information database is added to information stored in the attribute information database 330 on a card in transaction when the peeping occurs. Another example of the processing for a suspicious person 910 is to warn a user of being peeped. A message for prompting caution is displayed in the display 210, a lamp is turned on, or a buzzer is sounded. Another example of processing for a suspicious person 910 is to warn watchmen.

The peeping determination 900 may use information of a user after an act suspected of being peeping. For example, if a person suspected of being a peeping person performs ATM transaction after a user presumed to be peeped and the transaction is legal, the person may have happened to enter the image because the person was behind the previous user. In this case, the following actions are possible. The peeping information registered in the processing for a suspicious person 910 is deleted. Or a rank in the field indicating a caution level is lowered.

Contrary to the above case, when the facial information of a person suspected of being a suspicious person does not match the face image of a next user captured by the camera, since the person is near the ATM user though he (she) does not use the ATM, it is determined that the person is probably a peeping person. As another case, when a face determined to be the face of an identical person is detected in images in the course of transactions by several users, it is determined that the person is probably a peeping person. When a determination is made as a peeping person with a high possibility, a rank in the field indicating a caution level is raised.

According to this embodiment, since suspicious persons can be determined on the assumption that they peep, the safety of ATM use can be increased without having to previously register them as suspicious persons. A peeping person determined as a suspicious person by this embodiment can be registered in association with a card having been peeped, contributing to an increase in the safety of future use of the card having been peeped. Information about suspicious persons who rank high in caution level can be used for the creation of a suspicious person database used in the first embodiment and the like.

### Fourth Embodiment

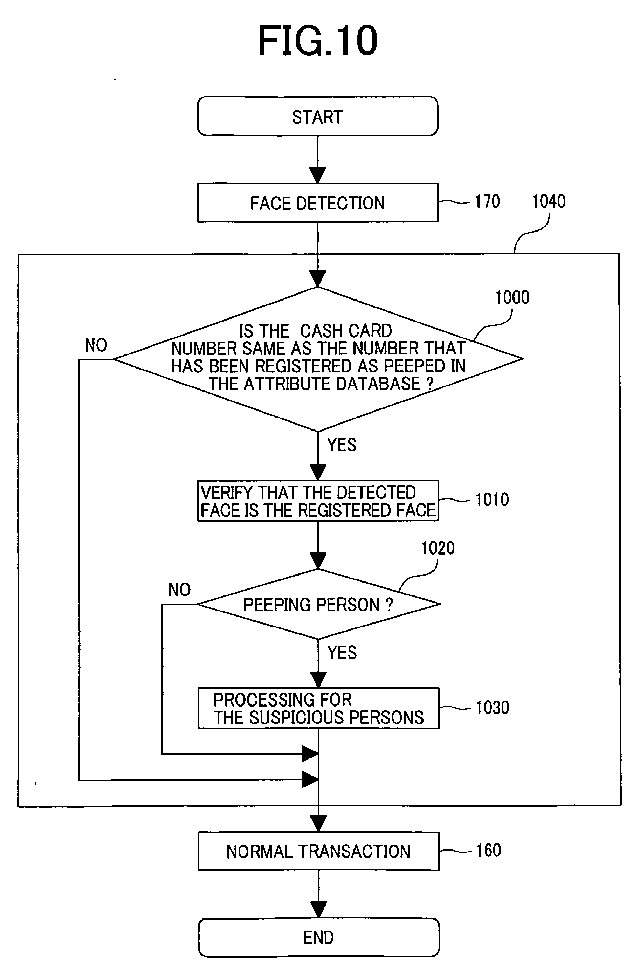

As a fourth embodiment of the present invention, a description will be made of an example of detecting persons who perform illegal transactions using other people's personal identification numbers, with reference to FIG. 10.

According to the processing flow of FIG. 9, information about persons who peeped at a personal identification number is registered in the biometrics information database 320 and the individual attribute database 330.

Next, a suspicious person is detected by a processing flow of FIG. 10. Face detection processing 170 detects a face area in an image. It is determined whether a card number in transaction is a number registered in the individual attribute database 330 as a card having been peeped (1000). If it is not registered, normal transaction is performed (160). If registered, it is determined whether the card is used by a legal owner or a peeping person (1010). Peeping face identification processing 1010 compares a detected face with facial information (past peeping person of the card) registered in the biometrics information database 320 corresponding to a card number having been peeped, registered in the individual attribute database 330. When a determination is made as not being a peeping person in peeping person determination processing 1020, normal transaction is continued (160). When a determination is made as a peeping person, processing for a suspicious person 1030 is performed. Subsequently, normal transaction (160) may be continued. In this case, however, to enable subsequent person identification, biometrics information such as a face picture and fingerprints may be requested to add processing different from the case of not being a peeping person or limit executable ATM transactions.

In the processing flow, a series of processings 1000, 1010, 1020, and 1030 are defined as 1040. One example of the processing for a suspicious person 1030 is the registration 152 of suspicious person information in FIG. 4. Another example of the processing for a suspicious person 1030 is to warn watchmen and bank clerks. As another example of the processing for a suspicious person 1020, as shown in FIG. 6, the transaction may be halted 600. In this case, unlike the flow of FIG. 10, after the transaction is halted, normal transactions are not performed. Examples of transaction halt include card withdrawal. The examples of the processing for a suspicious person 1020 may be used not only alone but also in combination.

Different persons in cooperation with a peeping person may perform illegal ATM transactions using information obtained by the peeping. Even in this case, it can be determined from the attribute information database that the card was previously peeped. For cards having been peeped, even when a user in transaction is determined as not being a past peeping person in the processing for a suspicious person 1020, safety can be ensured by stricter user authentication processing and bill and coin validation processing than usual and limitations of transaction contents. Information registered as peepers to other cards and information about other registered suspicious persons may also be referred to.

According to this embodiment, since cards presumed to be previously peeped can be identified, such cards can be subjected to processing ensuring higher safety. During verification with past peepers, the method of this embodiment enables verification with a higher precision than during verification with an unspecified number of people as shown in the first embodiment.

### Fifth Embodiment

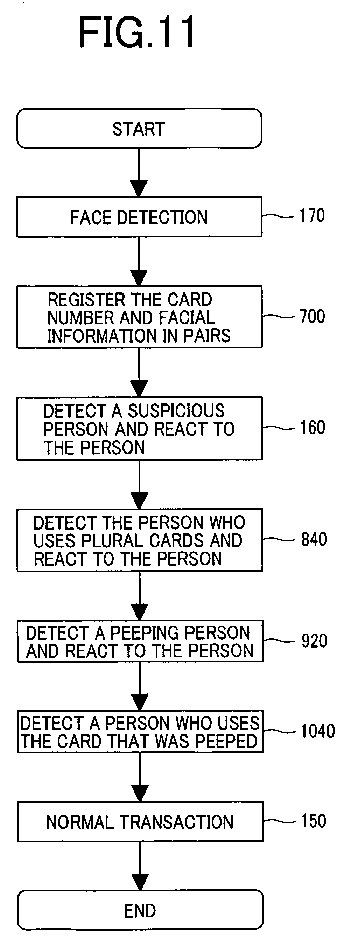

As a fifth embodiment, a processing flow capable of executing the first to fourth embodiments at the same time is shown in FIG. 11. Face detection processing 170 detects a face area in an image. Next, facial information and a card number are registered in pairs in the biometrics information database 320 and the individual attribute database 330 (700). Next, detection of a suspicious person and processing for the suspicious person 180 are performed. Next, detection of the person who uses plural cards, and processing for the person 840 are performed. Next, detection of a peeping person and processing for the person 920 are performed. Next, detection of a person who illegally uses a card, and processing for the person 1040 are performed. Last, normal transaction is performed. The order of the processings 700, 180, 840, 920, and 1040 in the above flow is not limited to the example of FIG. 11; the order may be changed. Not all of the processings needs to be performed; only necessary processings may be selected. In the middle of these processings, the transaction may be stopped.

Hereinafter, a description will be made of details of individual processing flows for implementing the first to fifth embodiments. Processings described below are examples and do not limit the processings from the first embodiment to the fifth embodiment.

As an embodiment of face detection processing, a technique is disclosed by JP-A No. 272973/1996. According to the technique, a face area is detected by determining a flesh color area in an image. The face area is detected from H (hue), S (saturation), and V (value) image information of the image. When input from a camera is used, RGB signals may be converted into HSV signals.

FIG. 12 is a drawing for explaining an embodiment of the face identification processing 130. The peeping face identification processing 1010 is the same in principle except that the database is different.

Facial feature detection processing 1200 detects the positions of eyes, nose, mouse, and the like from an image of the face area. Features to be detected, in addition to the above, may be freely decided, such as internal canthus, the corners of the eyes, eyebrow, and wings of nose, lips, and contour. These facial features are used as reference positions for finding facial feature amounts for face identification.

As an example of the facial feature detection processing 1200, an area that is dark at the center thereof and bright in peripheral portions thereof is detected from a gray image. The reason is that the pixels of eyes, nostrils, mouse, and the like are darker than their peripheral pixels. As a concrete example of the processing, the area can be obtained by a filter operation which compares the average and dispersion of pixels of an area at a distance of radius R1 or less from a noted pixel and the average and dispersion of pixels of an area between radiuses R1 to R2. By the filter processing, plural dark areas are detected as facial feature candidates. At this point, the facial feature candidates include other than actual facial features, and it cannot be determined to which facial features individual facial feature candidates correspond. Therefore, filter values and the like are used to assign priority to the facial feature candidates, and arrangement information among the facial feature candidates is used to determine facial features.

Feature extraction processing 1210 determines a feature amount from the position of an obtained facial feature. As a concrete example, spatial frequency information indicating changes of the brightness and shade of each feature and its peripheral pixels is obtained. The information is calculated for each feature and vectorized. The vectorized information is registered in the biometrics information database 320.

Matching processing 1220 compares a feature amount calculated from an input image with feature amounts registered in the biometrics information database 320. When there is one matching feature amount in the database, verification is performed to determine whether a user in transaction matches a person having the feature amount. When there are plural matching feature amounts in the database, identification is performed to determine which of persons having the feature amounts a user in transaction matches, or there is no matching person. A concrete example of matching processing is the nearest neighbor method. This method checks the distance between two vectors. The smaller the distance between two vectors, the higher the probability of being an identical person. For the verification, whether the persons subject to the verification are identical is determined by checking whether the distance value is within a threshold value. For the identification, the distances between the feature amount calculated from an input image and the individual feature amounts within the database are calculated, and a person having a feature amount when the distance is the smallest is obtained as a result of the identification. However, if the distance is equal to or greater than the threshold value, it is determined that the user in transaction is not registered in the database.

A description will be made of an example of the registration of biometrics information in the processing 700 during face recognition. In registration, the facial feature detection processing 1200 is performed for a face area detected by the face detection 170, and after the feature extraction processing 1210 is performed, feature amounts are stored in the biometrics information database 320.

## Claims

1. An information processing apparatus that performs processing based on a processing request input from a user, **characterised in that**
the information processing apparatus comprises a camera (230) and a control unit (200),
the camera takes the face image of a user in transaction, and
the control unit is adapted to execute the steps of:
detecting a user's face area in the taken image;
performing face identification based on the detected face area, and facial information registered in advance in a storage apparatus (320) that is included in the information processing apparatus or connected over a network (340);
determining from a result of the face identification whether the user is a suspicious person registered in advance; and
if the user is a suspicious person, performing processing for the suspicious person.

2. An information processing apparatus that performs processing based on a processing request input from a user, **characterised in that**
the information processing apparatus comprises a card reader (240) that reads information including the card number of a card accepted from the user, a camera (230), and a control unit (200),
the camera takes the face image of a user in transaction, and
the control unit is adapted to execute the steps of:
detecting a user's face area in the taken image;
registering facial information in the detected face area and a card number under the transaction processing in association with each other in a storage apparatus (330) that is included in the information processing apparatus or connected over a network (340);
performing face identification between the facial information in the detected face area and the facial information registered in advance in the storage apparatus (320);
determining from a result of the face identification whether an identical person attempts to perform transaction processing in plural cards; and
when it is determined that an identical person attempts to perform transaction processing in plural cards, regarding the identical person as a suspicious person and performing processing for the suspicious person.

3. The apparatus of claim 1 or 2 wherein, as the processing for the suspicious person,
the face of a person determined as a suspicious person is registered in a database (330), and/or
the threshold of validation of an entered bill is controlled, and/or
the transaction is halted.

4. The apparatus of claim 2 wherein, in the step that performs face identification between the facial information in the detected face area and the facial information registered in advance in the storage apparatus (320), the facial information registered in advance is facial information registered in association with transaction processing that was performed in a different card immediately before the relevant transaction processing.

5. An information processing apparatus that performs processing based on a processing request input from a user, **characterised in that**
the information processing apparatus includes a card reader (240) that reads information including the card number of a card accepted from the user, a camera (230), and a control unit (200),
the camera takes an image during transaction processing, and
the control unit is adapted to execute the steps of:
detecting a peeping suspicious person other than the user who is performing the transaction processing; and
when the suspicious person is detected, performing processing for the suspicious person.

6. The apparatus of claim 5, wherein the control unit (200), in the detection of a suspicious person,
uses the number of face images in the taken image to detect a suspicious person, or
determines a peeping suspicious person based on a positional relationship between the face image of other than the user, in the taken image, who is performing the transaction processing, and the image of the user who is performing the transaction processing, or
determines a peeping suspicious person using the face image of other than the user, in the taken image, who is performing the transaction processing, and a face image in a second image taken during transaction processing after the relevant transaction processing.

7. The apparatus of claim 5, wherein the control unit (200), in the processing for the suspicious person, stores the facial information of a detected suspicious person and the card number of the card used in the transaction processing in association with each other in a storage apparatus (330) that is included in the information processing apparatus or connected over a network (340).

8. An information processing apparatus that performs processing based on a processing request input from a user, **characterised in that**
the information processing apparatus comprises a card reader (240) that reads information including the card number of a card accepted from the user, a camera (230), and a control unit (200),
the camera takes an image during transaction processing, and
the control part executes the steps of:
detecting a user's face area in the taken image;
performing face identification based on the detected face area and the facial information of a suspicious person stored as a past peeper in a storage apparatus (330) that is included in the information processing apparatus or connected over a network (340); and
when it is determined from the face identification that the face area is that of the suspicious person, performing processing for the suspicious person.

9. The apparatus of claim 8, wherein the control unit (200) performs face identification using the facial information of a past peeper corresponding to a card under transaction processing, of information stored in the storage apparatus (330).

10. The apparatus of claim 8 wherein, as the processing for the suspicious person, the control unit (200) is adapted to
withdraw the card under the transaction processing, and/or
halt the transaction.
